# EUROPEAN PATENT APPLICATION

(11) **EP 4 328 288 A1**
(43) Date of publication of application: **28.02.2024**
(21) Application number: 22191561.4
(22) Date of filing: 22.08.2022
(51) Int. Cl.: C10L 3/06, C10L 3/08, C10L 3/10, F17D 1/04

(54) **MULTI-GAS PROCESSING AND TRANSPORT SYSTEM**

(71) Applicant: Ecole Polytechnique Fédérale de Lausanne (EPFL), 1015 Lausanne (CH)
(72) Inventor: MARECHAL, François, 1950 Sion (CH)
(74) Representative: reuteler & cie SA

(57) **Abstract**

A gas processing and transport system comprising a natural gas pipeline (1), a plurality of gas conditioning stations (4) connected to the natural gas pipeline between an upstream main natural gas supply and a downstream consumer end, the gas processing stations including carbon dioxide producers and carbon dioxide consumers, the carbon dioxide producers including natural gas consumers, at least one control system (10), and at least one sensor connected to the control system. At least one of the gas processing stations producing carbon dioxide is configured to inject produced CO₂ into the natural gas pipeline, and at least the gas processing station(s) consuming natural gas comprise(s) a gas separating membrane (5) configured for separating at least CO₂ from CH₄.

## Description

### Field of the invention

This invention relates to a system for reducing carbon dioxide emissions from use of natural gas supplied in a natural gas pipeline or grid.

### Background of the invention

Natural gas distributed to natural gas consumers via a gas pipeline network should have a certain level of purity to satisfy requirements for use in boilers, burners, fuel cells and internal combustion engines. A principal source of natural gas is fossil natural gas extracted and conditioned in a given place before being fed into a natural gas pipeline network that distributes the gas to end users. Other sources of combustible gases such as biogas may be purified and injected in the natural gas grid.

Each mole of natural gas when oxidized produces about one mole of CO2 that is a cause of global warming. With the goal of reducing the carbon dioxide emissions and mitigating the impact of the global warming by natural gas usage, CO2 capture technologies are integrated and various solutions for the transformation and/or the long term sequestration of the captured CO2 are available, for instance:
1. CO₂ sequestration or mineralisation of captured CO₂: this may be realised in special places where the carbon dioxide can be processed and disposed safely in the environment either by compressing it and injecting in deep acquifers or mines or by mineralisation.
2. CO₂ can be chemically reduced, processed and conditioned to produce long-life products such as polycarbonates or a mineral product after being.
3. CO₂ can be transformed into a new hydrocarbon liquid fuel using renewable electricity by combining electrolysis and a synthesis reaction.
4. CO₂ can be transformed back into methane using renewable electricity by combining electrolysis and a methanation reaction.

The transformation into a new fuel is typically done by using excess renewable electricity such as from wind or solar energy. This means that the carbon dioxide should be stored at the place of the treatment to be processed when excess electricity is available on the grid.

A drawback of conventional CO₂ capture and transformation solutions is the high cost and inefficiency of capturing CO2 from the place of generation and storing and transporting it to the place of sequestration or transformation.

### Summary of the invention

In view of the foregoing, an object of the invention is to provide a system for the efficient transport of carbon dioxide produced by the consumption of natural gas from the place where it is captured to the place where it will be processed.

It is advantageous to provide a system for processing and transporting gas that is economical to install and maintain.

It is advantageous to provide a system for processing and transporting gas that may be integrated in existing infrastructure in a flexible rapid manner with minimal impact on the overall network.

It is advantageous to provide a system for processing and transporting gas that allows an efficient removal of carbon dioxide.

It is advantageous to provide a system for removal of carbon dioxide in a natural gas user network that can be quickly installed in existing infrastructure and easily maintained and upgraded with new user installations.

It is advantageous to provide a system that can integrate CO₂ and other gas storage to realise the renewable energy management.

It is advantageous to provide a gas processing and transport system allowing CO₂ capture or transformation in different configurations in an existing network in a simple manner.

Objects of this invention have been achieved by providing the system according to claim 1.

Disclosed herein is a gas processing and transport system comprising a natural gas pipeline, a plurality of gas conditioning stations connected to the natural gas pipeline between an upstream main natural gas supply and a downstream consumer end, the gas processing stations including carbon dioxide producers and carbon dioxide consumers, the carbon dioxide producers including natural gas consumers, at least one control system, and at least one sensor connected to the control system.

At least one of the gas processing stations producing carbon dioxide is configured to inject produced CO2 into the natural gas pipeline, and at least the gas processing station(s) consuming natural gas comprise(s) a gas separating device such as a membrane configured for separating at least CO2 from CH4.

In an advantageous embodiment, at least one of the gas processing stations configured to extract carbon dioxide from the gas pipeline network.

In an advantageous embodiment, at least one of the gas processing stations is configured to inject methane into the natural gas pipeline.

In an advantageous embodiment, at least one of the gas processing stations is a methanation station.

In an advantageous embodiment, the methanation station is configured to consume CO2 extracted from the natural gas pipeline.

In an advantageous embodiment, the gas processing stations configured to inject gas into the natural gas pipeline comprise a pressure regulating mechanism including a pressure sensor and a compressor connected to the control system configured to regulate the pressure of the gas injected into the pipeline.

In an advantageous embodiment, at least of the gas processing stations is a natural gas consumer such as a boiler, a gas turbine, an internal combustion engine, a fuel cell, a gas fuelling station or a chemical process.

In an advantageous embodiment, at least one of the gas processing stations is a carbon dioxide capture station positioned downstream of gas processing stations injecting carbon dioxide into the natural gas pipeline, the carbon dioxide capture station comprising a gas separating device (e.g. a membrane) configured for separating at least CO2 from CH4 between an extraction point on the pipeline and the carbon dioxide capture station.

In an advantageous embodiment, at least one of the gas processing stations comprises a gas storage tank for storing gas components extracted from the natural gas pipeline or extracted and transformed from gas extracted from the natural gas pipeline.

In an advantageous embodiment, the gas storage tank comprises a CO2 storage tank and a CH4 storage tank, acting as a buffer to regulate the injection and extraction of CO2 and CH4 into and out of the pipeline.

In an advantageous embodiment, the sensors include at least one gas composition sensor connected to the at least one control system, configured to determine the concentration of one or more gases in the pipeline or extracted from the gas pipeline or injected into the gas pipeline.

In an advantageous embodiment, at least one gas composition sensor includes a WOBBE index sensor for determining the combustion properties of the natural gas in the gas pipeline or extracted from the gas pipeline.

In an advantageous embodiment, at least one of the gas separating devices (e.g. membranes) of the natural gas pipeline in a station extracting gas from the pipeline includes a membrane configured to separate out gases heavier than carbon dioxide and/or gases lighter than methane.

In an advantageous embodiment, the system is configured to coordinate operation of the gas processing stations to maintain selected gas composition constraints.

Further objects and advantageous aspects of the invention will be apparent from the claims, and from the following detailed description and accompanying figures.

### Brief description of the drawings

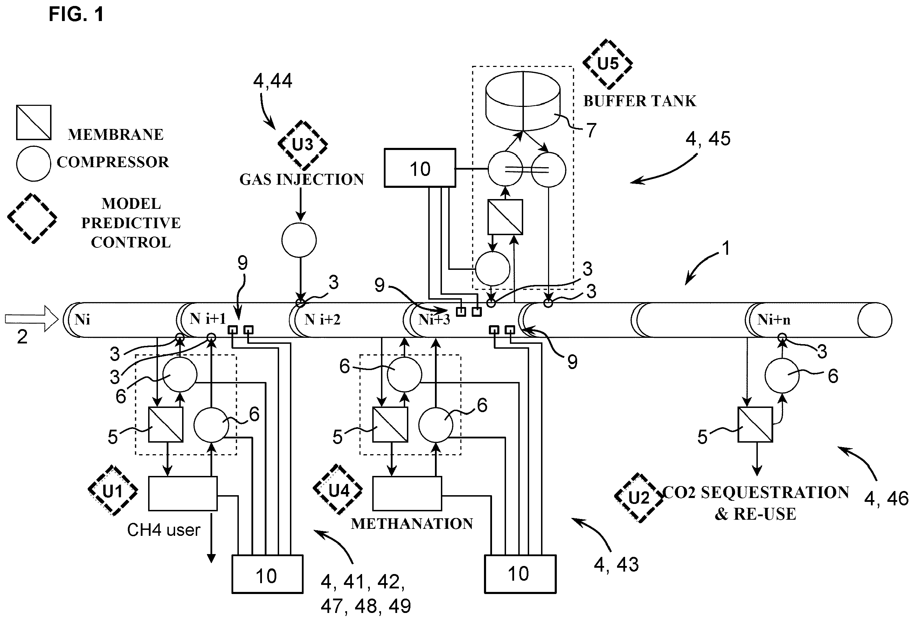

**Figure 1** is a schematic representation of a system for processing and transporting natural gas and carbon dioxide, including stations for the consumption or production of gases along the network, according to an embodiment of the invention.

### Detailed description of the invention

Referring to the figure, a gas processing and transport system comprises a natural gas pipeline 1 and a plurality of gas processing stations 4 installed along the pipeline 1. The pipeline 1 is illustrated as a single pipe, however could be in the form of a pipeline network with a plurality of branches extending between one or more sources of natural gas and a plurality of consumers of natural gas. The natural gas pipeline or pipeline network 1 may include or consist of an existing gas distribution network that is retrofitted with components to form the gas processing and transport system according to embodiments of this invention.

The gas processing stations 4 connected to the natural gas pipeline 1 may include various consumers or producers of gas products flowing in the pipeline. The gas products may be composed principally of methane (CH₄), hydrogen (H₂), carbon dioxide (CO₂) and possibly other combustible gases such as ethane (C₂H₆), propane (C₃H₈), butane (C₄H₁₀) and various other gases found in natural gas, as well gases in the air (oxygen, nitrogen, argon), or biogases. In embodiments of the present invention, the main gases of interest are methane, being a principle combustion component of natural gas, hydrogen and carbon dioxide as a product of combustion of natural gas.

An aim of the invention is to reduce the emission of carbon dioxide into the atmosphere and thus to sequester or transform the carbon dioxide, for instance for re-use using if possible renewable energies or excess energy in an electrical grid.

The natural gas pipeline network may have a main natural gas supply 2 from a main natural gas grid. The gas processing stations 4 may include energy conversion stations such as gas turbines, internal combustion engines, and heating stations, or chemical plants for converting the natural gas to higher value chemical products such as fertilizers or petrochemicals products.

In figure 1, some of these possible gas processing stations are illustrated as examples to better illustrate the invention. The illustrated stations including an internal combustion engine 41, a fuel cell 42, a methanation plant 43, a hydrolysis plant 44, a CO₂ storage tank 45, and a CO₂ capture or sequestration and re-use station 46.

All or most of the gas processing stations 4 consuming natural gas comprise a gas separating device (e.g. membrane) 5 configured for separating carbon dioxide from methane or other gases such that the carbon dioxide can be separated from other gases for re-use, or storage, or sequestration. There may be more than one membrane 5 interconnecting the gas pipeline 1 to the gas processing station 4 depending on the selection of gases to be separated out, which depends on the use of those gases by the processing station. Gas separation membranes are per-se known and include polymeric membranes and inorganic membranes (graphene, carbon molecular sieve, zeolite, metal-organic frameworks).

For instance, the CO₂ may be separated from CH₄ and H₂ and H₂ further separated from the CH₄. Also, other gases such as nitrogen may be separated from the CO₂.

The gas separating device (e.g. membrane) 5 may be connected to a gas consuming device such as an internal combustion engine or fuel cell 41, 42 or a methanation plant 43 via a compressor 6 that may be positioned between the membrane and the natural gas pipeline 1, in particular between an outlet 51 of the gas separating membrane and the natural gas pipeline 1. At least one of the gas processing stations transforms CO₂ into other chemical compounds, preferably a methanation station producing methane from carbon dioxide, or a carbon dioxide sequestration station capturing carbon dioxide.

The gas processing transport system further comprises one or more control systems 10 and sensors 9 including pressure and gas composition sensors connected to the one or more control systems. The gas compressors 6 may also be connected to the one or more control systems 10. The control system comprises a module configured to control the compressor and/valves connecting the compressor to the pipeline to regulate the pressure and the flows of the gas injected into the natural gas pipeline. The control system may comprise a predictive control (PC) module that obtains pressure and concentration readings from different sensors and evaluates the corrective actions that need to be taken used to maintain the node pressure to ensure the stability and continuity of the gas flow direction.

The sensors 9 may further include a temperature sensor, and a gas composition sensor that may for instance include a WOBBE index sensor to determine the combustion properties of the natural gas where the sensor is positioned along the pipeline.

The sensors may be positioned at various positions along the natural gas pipeline and/or at the gas processing stations, for instance at the inlets and outlets to the gas pipeline network.

The natural gas flows in the pipeline from a gas supply end 2 towards a consumer end due to a certain pressure gradient whereby the control system 10 controls the pressure of the gases that are injected into the pipeline depending on the pressure found at the node Ni+n at which the gas processing station is connected.

The pressure regulation of the gas injected into the pipeline may be regulated by controlling the gas compressors 6 and/or valve or filter mechanisms interconnecting the gas compressor to the pipeline 1.

The control system may be further configured to ensure that the partial pressure of methane remains above a pre-determined threshold value ensuring that downstream consumers may extract natural gas at sufficient pressure and quantities for their consumption needs. The injection of methane in the natural gas pipeline 1 may be performed at one or more selected intervals in nodes Ni along the pipeline depending on the gas processing stations arranged along the pipeline to ensure a sufficient supply of methane for downstream users.

A methane gas processing stations may for instance be in the form of a methanation station 43 using excess electrical energy, preferably renewable energy, and carbon dioxide extracted from the gas pipeline.

Methane and CO₂ storage tanks may be provided coupled to the methanation station in order to provide a buffer between the production of methane and availability of electrical energy and the supplemental methane required in the gas pipeline depending on upstream and downstream consumption.

The gas processing transport system may thus be provided with a plurality of nodes Ni+n for injecting and separating gases and configured for maintaining a smooth operation, these nodes having different gas processing stations as previously described. Each node can have different functions as described below:
**U1:** Natural gas using unit: A membrane module 5 separates methane or hydrogen that is used as fuel in U1 as an internal combustion engine (ICE) 41, a fuel cell 42, a boiler 47, a gas turbine 48, or a chemical process 49. The membrane module 5 is controlled to reach the fuel quality requested by its use in unit U1. If captured, the produced carbon dioxide in U1 is compressed by the compressor 6 and injected into the natural gas pipeline 1. The carbon dioxide separation from U1 may be performed using *per se* known carbon capture technology or oxy-combustion.
**U2:** A membrane module 5 extracts carbon dioxide to be reused, stored or sequestrated.
**U3:** Gas injection like biogas produced by anaerobic digestion of biomass, or hydrogen produced by an electrolyser using renewable or excess electricity. The biogas or hydrogen is compressed and injected into the natural gas pipeline.
**U4:** A gas conditioning module 5 and a chemical reactor converts carbon dioxide into methane via a methanation or biomethanation process. The produced methane is compressed and injected into the natural gas pipeline.
**U5:** This station is advantageous for maintaining concentrations of required gases in the natural gas pipeline within defined limits. Membrane modules 5 can be used to separate methane or carbon dioxide, that can be stored in a hybrid storage tank (buffer tank). The concentration of gases to be maintained within defined limits in the pipeline can be controlled using the hybrid storage tank processing station 45 to add or remove methane or carbon dioxide, based on the readings of the pressure and concentration sensors around the nodes.

The control system 10 may comprise a supervision model that includes a predictive control which checks and maintains gas component concentrations and delivery pressures at different locations along the natural gas pipeline 1.

Many gas processing and using stations 4 may be connected to an existing gas processing and transport system infrastructure and certain processing stations may be installed along the network and existing stations may be retrofitted with gas separating membranes and gas compressors and various sensors and control system in order to implement the invention. There may further be extraction units to manage the purge of inert gases or other heavier gases that would cumulate in the natural gas pipeline.

In summary, a main feature of the invention is to use the gas pipe line of a natural gas network to transport in the same pipe natural gas, hydrogen and carbon dioxide, thus overcoming the cost and the difficulty of deploying a new infrastructure for CO2 transportation and for H2 seasonal storage. Each point of use of natural gas is converted by adding a membrane system that is designed to deliver natural gas at the quality required in pressure and concentration by the user by separating the methane from the gas mixture in the pipe. This is typically a CO2/CH4 membrane separation system with a selectivity in CH4 high enough to reach the Wobbe index required by the natural gas conversion unit. On the pipe system, there are carbon dioxide extraction systems comprising a membrane system that selectively separates CO2 from the mixture in the pipe, the purpose of this unit being to extract as pure as possible CO2 in order to maintain the methane concentration in the grid. Extraction units may also include a device to manage the purge of inert gases or other heavier gases that could accumulate in the line. The placement of such units depends on the network configuration, the gas usage and on the type of CO2 sequestration or reuse strategy. The gas grid may thus accept gas injections in form of mixtures of CH4, H2 and CO2 with any concentration. The gas pipe line may be connected to a feeding system from a main line or from local sources. This feeding system advantageously includes a buffer to control the gas balance. Both feeding and extraction systems may use a pressure management system to control the flows in the network.

Following the stoechiometry of methane combustion, the gas pipeline should take back 1 mole of carbon dioxide for each mole of natural gas distributed if the total amount of methane is burnt. At each point of use of the natural gas it is therefore useful to have gas supply units that condition the gas mixture in the pipe to reach the gas concentration needed by the end-user. In addition, in order to maintain the concentration of methane in the pipe at a suitable level for all the users, there is a need to have places in the gas network where the carbon dioxide will be extracted in the suitable concentration for the sequestration or reuse. The methane balance is maintained by adding feeding sources in the grid. The net flow in the system may be organised as a function of the extraction and feeding points and advantageously makes use of a predictive pressure management system.

The system according to the invention allows the large scale integration of renewable energy and the management of captured CO2 using the natural gas grid infrastructure. The system will also enable for the large scale deployment of CO2 capture in small units like natural gas based cogeneration units like fuel cells or engines with CO2 capture as well as the deployment of CO2 capture on trucks and cars by creating the captured CO2 collection infrastructure and connecting it to the CO2 sequestration or reuse processes. It will also allow to integrate the deployment of bio gas production units and will allow the large scale deployment of biogenic carbon capture and sequestration units as identified by the IPCC.

### List of feature references:

Gas processing and transport system
**Gases**
   **CO2, CH4, H2, Natural gas, Biogas.....**
CO2 transformation products
**Natural gas pipeline (network / grid) 1**
   **Natural gas supply 2**
   **Gas Injection points 3**
   **Node Ni+n**
**Gas processing stations 4**
   (Consumers /producers /transformers CO2, CH4, H2, Natural gas....)
   **Thermal engines 41**
      Internal combustion engine
      Gas turbine
   **Fuel cell 42**
   **Methanation plant 43**
   **Hydrolyser 44**
   **Buffer gas storage station 45**
   **CO2 capture or sequestration or storage station 46**
**Gas separating device (e.g. gas separating membrane) 5**
   **CO2, CH4, H2**
**Gas compressor 6**
**Storage / Buffer tank 7**
**Pressure regulating mechanism 8**
**Sensors 9**
   Pressure sensors
   Gas composition sensors
   Temperature sensors
**Control system 10**

## Claims

1. A gas processing and transport system comprising a natural gas pipeline (1), a plurality of gas conditioning stations (4) connected to the natural gas pipeline between an upstream main natural gas supply and a downstream consumer end, the gas processing stations including carbon dioxide producers and carbon dioxide consumers, the carbon dioxide producers including natural gas consumers, at least one control system (10), and at least one sensor connected to the control system, **characterized in that** at least one of the gas processing stations producing carbon dioxide is configured to inject produced CO₂ into the natural gas pipeline, and at least the gas processing station(s) consuming natural gas comprise(s) a gas separating device (5) configured for separating at least CO₂ from CH₄.

2. The system according to any preceding claim wherein at least one of the gas processing stations is configured to extract carbon dioxide from the gas pipeline network.

3. The system according to any preceding claim wherein at least one of the gas processing stations is configured to inject methane into the natural gas pipeline.

4. The system according to any preceding claim wherein at least one of the gas processing stations is a methanation station (43).

5. The system according to the preceding claim wherein the methanation station is configured to consume CO₂ extracted from the natural gas pipeline.

6. The system according to any preceding claim wherein the gas processing stations configured to inject gas into the natural gas pipeline comprise a pressure regulating mechanism including a pressure sensor and a compressor connected to the control system (10) configured to regulate the pressure of the gas injected into the pipeline.

7. The system according to any preceding claim wherein at least one of the gas processing stations (4) is a natural gas consumer comprising for instance any one or more of a boiler, a gas turbine, an internal combustion engine, a fuel cell, a gas fuelling station or a chemical processing unit.

8. The system according to any preceding claim wherein at least one of the gas processing stations (4) is a carbon dioxide capture station positioned downstream of gas processing stations injecting carbon dioxide into the natural gas pipeline (1), the carbon dioxide capture station comprising a gas separating device such as a gas separating membrane (5) configured for separating at least CO₂ from CH₄ between an extraction point on the pipeline and the carbon dioxide capture station.

9. The system according to any preceding claim wherein at least one of the gas processing stations comprises a gas storage tank (7) for storing gas components extracted from the natural gas pipeline or extracted and transformed from gas extracted from the natural gas pipeline.

10. The system according to the preceding claim wherein the gas storage tank comprises a CO₂ storage tank and a CH₄ storage tank, acting as a buffer to regulate the injection and extraction of CO₂ and CH₄ into and out of the pipeline.

11. The system according to any preceding claim wherein the sensors include at least one gas composition sensor connected to the at least one control system, configured to determine the concentration of one or more gases in the pipeline or extracted from the gas pipeline or injected into the gas pipeline.

12. The system according to the preceding claim wherein the at least one gas composition sensor includes a WOBBE index sensor for determining the combustion properties of the natural gas in the gas pipeline or extracted from the gas pipeline.

13. The system according to any preceding claim wherein at least one of the gas separating devices (5) of the natural gas pipeline in a station extracting gas from the pipeline includes a device such as a membrane configured to separate out gases heavier than carbon dioxide and/or gases lighter than methane.

14. The system according to any preceding claim wherein the system is configured to coordinate operation of the gas processing stations to maintain selected gas composition constraints.
